# EUROPÄISCHE PATENTSCHRIFT

(11) **EP 1 430 737 B1**
(45) Veröffentlichungstag und Bekanntmachung des Hinweises auf die Patenterteilung: **03.12.2008**
(21) Anmeldenummer: 02781097.7
(22) Anmeldetag: 23.09.2002
(51) Int. Cl.: H04Q 7/22, H04L 12/58

(54) **VERFAHREN ZUM ABSPEICHERN VON KURZNACHRICHTEN**
METHOD FOR STORING SHORT DATA
PROCEDE DE MEMORISATION D'INFORMATIONS BREVES

(30) Priorität: 24.09.2001 DE 10146878
(43) Veröffentlichungstag der Anmeldung: 23.06.2004
(73) Patentinhaber: T-Mobile Deutschland GmbH, 53227 Bonn (DE)
(72) Erfinder: KRAMARZ-VON KOHOUT, Gerhard, 53113 Bonn (DE)
(74) Vertreter: Riebling, Peter
(86) Internationale Anmeldenummer: PCT/DE2002/003559
(87) Internationale Veröffentlichungsnummer: WO 2003/028391

(56) Entgegenhaltungen:
- EP-A- 0 989 763
- WO-A-01/33803
- DE-C- 19 654 859
- US-B1- 6 246 871
- SMALE S: "HP OPENMAIL SHORT MESSAGE SERVICE (SMS) GATEWAY: TH MOBILE PHONE AS AN E-MAIL CLIENT-OF-CHOISE" INTERNATIONAL WORKSHOP ON MOBILE MULTI-MEDIA COMMUNICATIONS, XX, XX, 11. April 1995 (1995-04-11), Seiten 1-6, XP000671022

## Beschreibung

Die Erfindung betrifft ein Verfahren zum Abspeichern von Kurznachrichten, nach dem Oberbegriff des Patentanspruches 1.

Es sind Verfahren zum Abspeichern von Kurznachrichten, allgemein als SMS-Nachrichten bezeichnet, bekannt, bei denen der Teilnehmer eine auf einem Mobilfunkendgerät empfangene SMS-Nachricht z. B. durch die Funktion "weiterleiten an" zu einem Service-Provider sendet. Dort werden diese SMS-Nachrichten in einem passwortgeschützten Speicher abgelegt und können vom Teilnehmer über das Internet jederzeit abgerufen, bearbeitet, ausgedruckt oder gelöscht werden.

Nachteilig bei diesem Verfahren ist, dass die Speicherplätze für SMS-Nachrichten in Mobilfunkendgeräten oder der SIM-Karte nur in begrenztem Umfang vorhanden sind. Üblicherweise wird bei einem Eintreffen einer neuen SMS-Nachricht und bei vollen Speicherplätzen die älteste SMS-Nachricht gelöscht oder diese neue SMS-Nachricht wird erst dann abgespeichert, wenn der Teilnehmer mindestens einen Speicherplatz durch manuelles Löschen frei gemacht hat. Es muss also vor dem Weiterleiten der SMS-Nachricht zum externen Speicher bei dem Service-Provider zumindest ein Speicherplatz im Mobilfunkendgerät zur Verfügung stehen oder der Verlust der ältesten im Mobilfunkendgerät abgespeicherten Nachricht muss in Kauf genommen werden ohne dass überprüft werden kann, ob sich diese älteste Nachricht bereits in dem externen Speicher befindet. Nachteilig ist weiterhin, dass die begleitenden Informationen der SMS-Nachricht, wie Rufnummer des Absenders, Datum und Uhrzeit, durch das Weiterleiten verloren gehen bzw. mit der eigenen Rufnummer und den Zeitpunkt der Weiterleitung überschrieben werden.

WO 01/33803 A offenbart ein Verfahren zur Übertragung von Multimedianachrichten zwischen Mobilstationen eines digitalen Mobilfunknetzes. Darin wird das Problem behandelt, dass Multimedianachrichten aufgrund unterschiedlicher Formate und Protokolle oft nicht direkt zwischen Mobilfunknetzen verschiedener Netzbetreiber ausgetauscht werden können. Dieses Problem wird dadurch gelöst, dass eine von einem Absender abgesendete Multimedianachricht an einen Multimedia-Nachrichtenserver gesendet wird und dort in eine e-mail umgewandelt wird. Die e-mail wird über ein Internetprotokoll an einen dem Empfänger zugeordneten Multimedia-Nachrichtenserver gesendet und dort wieder in eine Multimedianachricht in einem vom Empfänger lesbaren Format umgewandet. Die umgewandelte Multimedianachricht kann nun an den Empfänger übermittelt werden.
EP 0 989 763 A2 offenbart die Umwandlung einer Kurznachricht in eine E-Mail und den Versand dieser E-Mail an einen Empfänger.

Die Aufgabe der Erfindung ist es, eine automatische und dadurch sichere Abspeicherung aller, von einem Teilnehmer versendeten oder/und einem Teilnehmer zugesandten Kurznachrichten unabhängig vom Speicherbelegungsgrad des Mobilfunkendgerätes zu ermöglichen.

Diese Aufgabe wird durch die in dem unabhängigen Patentanspruch genannten Merkmale gelöst.

Vorteilhafte Ausgestaltungen dieser Erfindung sind in den Unteransprüchen enthalten.

Die Erfindung hat den Vorteil, dass selbst bei gestörten Mobilfunk-Übertragungswegen die Kurznachrichten sicher und zuverlässig im Zugriffsbereich des Teilnehmers hinterlegt sind. Da die Kurznachrichten als e-mail direkt in einer vorbestimmten e-mail-box des Mobilfunkteilnehmers als Empfänger abgelegt sind, kann diese Nachricht unproblematisch und kostengünstig ausgelesen und weiterbehandelt werden, ohne dass eine nochmalige Konvertierung notwendig ist.

Zudem entfällt durch das automatische Duplizieren der SMS-Nachricht die zeitaufwendige, da manuelle, und teuere Weitersendung an den externen Speicher, da üblicherweise für das Aussenden einer Kurznachricht von einem Mobilfunkendgerät aus nach dem Stand der Technik eine Gebühr vom Betreiber des Mobilfunknetzes in Rechnung gestellt würde. Ein unbeabsichtigtes Unterlassen des Sicherns der Kurznachricht und damit der Verlust ggf. wichtiger Nachrichten, insbesondere bei vollem Speicherplatz im Mobilfunkendgerät ist nicht mehr möglich.

Weiterhin ist ein Vorteil der Erfindung, dass auch bei einem defekten Mobilfunkendgerät die Kurznachrichten sicher den Teilnehmer als e-mail erreichen und dann über das Internet, als Kurznachrichten (z. B. SMS-Nachrichten) an eine andere Mobilfunkadresse, als gesprochene e-mails an einem Festnetzanschluß, als ausgedruckte Schreiben (z. B. Faksimile) oder in anderen möglichen Formen, je nach Einstellung der e-mai-box, an den Teilnehmer weitergeleitet oder von diesem abgefragt werden können.

Durch die Möglichkeit des externen Abspeicherns der versendeten Kurznachrichten können diese ebenfalls lückenlos archiviert werden ohne dass die Anzahl der Kurznachrichten durch den internen Speicherplatz des Mobilfunkendgerätes begrenzt wird.

Nachfolgend wird die Erfindung anhand eines Ausführungsbeispiels näher erläutert.

Eine SMS-Nachricht an einen Mobilfunkteilnehmer wird in einer zentralen Einrichtung innerhalb des Mobilfunknetzes des Empfängers vor oder zeitgleich mit der Aussendung über die Luftschnittstelle an das Mobilfunkendgerät dupliziert, in eine e-mail umgewandelt, an eine persönliche e-mail-box des Mobilfunkteilnehmers weitergeleitet und dort abgespeichert. Diese e-mail-box kann in bekannter Weise sowohl über das Mobilfunknetz als auch über das Festnetz erreicht werden und das Auslesen der e-mails erfolgt in bekannter Weise mittels Computer, Festnetztelefon oder Mobilfunkendgerät, als Sprachausgabe oder alphanumerische Ausgabe auf einem Display oder Bildschirm, bzw. das Bearbeiten erfolgt mittels der Tastaturen der vorgenannten Geräte oder durch Sprachbefehle. Eine Bindung der e-mail-box an einen bestimmten Netzbetreiber ist nicht notwendig.

Hat der Mobilfunkteilnehmer den Service "Benachrichtigung per SMS über eingegangene e-mails" aktiviert, so werden duplizierte und in e-mails umgewandelte SMS-Nachrichten aufgrund ihrer Ursprungsdaten entweder bereits in der e-mail-box erkannt und eine Benachrichtigung unterbleibt oder die Benachrichtigung wird in der zentralen Einrichtung des Mobilfunknetzes unterdrückt. Möglich ist auch, per Steuerbefehl von der zentralen Einrichtung aus den Service "Benachrichtigung" nur für die duplizierten SMS-Nachrichten außer Kraft zu setzen.
In der zentralen Einheit werden auch die SMS-Nachrichten erkannt, die das Eintreffen einer ursprünglichen e-mail am Mobilfunkendgerät signalisieren, da deren Ursprung die eigene e-mail-box des Mobilfunkteilnehmers ist. Diese SMS-Nachrichten werden von der Duplizierung ausgenommen.

Ohne diese Maßnahmen würde bei gleichzeitiger Nutzung des Services "Benachrichtigung per SMS über eingegangene e-mails" und dem erfindungsgemäßen Verfahren eine Endlosschleife beim Benachrichtigen und Abspeichern entstehen.

Generell schließt der hier verwendete Begriff SMS-Nachricht auch EMS-Nachrichten (Enhanced Messaging Service) mit ein, die beispielsweise bei der Übertragung von Logos, Klingeltönen, formatierten Textnachrichten und ähnlichen Nachrichten dienen und aus mehreren SMS-Nachrichten bestehen können. Weiterhin kann die Erfindung bei den noch komplexeren MMS-Nachrichten (multimedia Messaging Service) z. B. für eine Bildübertragung innerhalb der UMTS-Technologie Anwendung finden.

Die Speicherung von gesendeten SMS-Nachrichten in einer e-mail-box, welche diese Nachrichten sendenden Mobilfunkteilnehmers zugeordnet ist, erfolgt in analoger Weise, wobei sich die zentrale Einheit dann am von diesem Mobilfunkteilnehmer entfernten Ende der Luftschnittstelle innerhalb des Mobilfunknetzes befindet.

Die Zuordnung der e-mail-boxen zu den jeweiligen Mobilfunkteilnehmern kann durch die Mobilfunkteilnehmer selbst mittels SMS-Nachricht, per Internet, telefonisch, schriftlich usw. erfolgen, wobei ggf. auch ein Passwort Verwendung finden kann.

## Patentansprüche

1. Verfahren zum Abspeichern von Kurznachrichten, die innerhalb eines Mobilfunknetzes an ein Mobilfunkendgerät eines Mobilfunkteilnehmers adressiert sind, **gekennzeichnet durch** die Schritte: Empfangen der zu dem Mobilfunkendgerät abgesendeten Kurznachricht in einer zentralen Einrichtung des Mobilfunknetzes;
Aussenden der Kurznachricht über die Luftschrittstelle an das Mobilfunkendgerät;
Automatisches duplizieren der Kurznachricht zeitgleich mit der Aussendung über die Luftschnittstelle; Umwandeln des erzeugten Duplikats in eine e-mail Nachricht;
Abspeichern der e-mail Nachricht in einer persönlichen e-mail-box des Mobilfunkteilnehmers innerhalb eines beliebigen Nachrichtensystems unabhängig vom Mobilfunknetz; und
Auslesen der e-mail **durch** den Mobilfunkteilnehmer.

2. Verfahren nach Anspruch 1, **dadurch gekennzeichnet, dass** die abgesandten Kurznachrichten in die e-mail-box abgespeichert werden, die dem, diese Kurznachrichten sendenden Mobilfunkteilnehmer zugeordnet ist.

3. Verfahren nach Anspruch 1, **dadurch gekennzeichnet, dass** die empfangenen Kurznachrichten in die e-mail-box abgespeichert werden, die dem Mobilfunkteilnehmer zugeordnete ist, für den die Kurznachrichten bestimmt sind.

4. Verfahren nach Anspruch 2 oder 3, **dadurch**
**gekennzeichnet,**
**dass** solche Kurznachrichten von der Duplizierung ausgenommen werden, die das Eintreffen einer beliebigen e-mail in der e-mail-box signalisieren.

5. Verfahren nach Anspruch 2 oder 3, **dadurch**
**gekennzeichnet,**
**dass** das Aussenden einer Kurznachricht zur Signalisierung einer eingetroffenen e-mail zu dem Mobilfunkendgerät unterbleibt, wenn diese e-mail eine duplizierte und umgewandelte Kurznachricht ist.

6. Verfahren nach Anspruch 1, **dadurch gekennzeichnet, dass** die Zuordnung der e-mail-box zu den jeweiligen Mobilfunkteilnehmern durch diese selbst erfolgt.

## Claims

1. Method for storing short messages which are addressed within a mobile communications network to a mobile communications terminal device of a mobile communications subscriber, **characterised by** the steps: reception of the short message sent off to the mobile communications terminal device in a central device in the mobile communications network;
transmission of the short message via the air interface to the mobile communications terminal device;
automatic duplication of the short message at the same time as transmission via the air interface;
conversion of the duplicate generated into an email message;
storage of the email message in a personal email box of the mobile communications subscriber within any desired message system independently of the mobile communications network; and
reading of the email by the mobile communications subscriber.

2. Method according to claim 1, **characterised in that** the dispatched short messages are stored in the email box allocated to the mobile communications subscriber sending these short messages.

3. Method according to claim 1, **characterised in that** the received short messages are stored in the email box allocated to the mobile communications subscriber for whom the short messages are destined.

4. Method according to claim 2 or 3, **characterised in that** those short messages are excluded from duplication which signal the arrival of any email in the email box.

5. Method according to claim 2 or 3, **characterised in that** the transmission of a short message to signal a received email to the mobile communications terminal device is omitted when this email is a duplicated and converted short message.

6. Method according to claim 1, **characterised in that** the allocation of the email box to the respective mobile communications subscribers ensues through the latter themselves.

## Revendications

1. Procédé pour mettre en mémoire des messages courts qui sont adressés à l'intérieur d'un réseau de téléphonie mobile à un terminal de téléphonie mobile d'un abonné mobile, **caractérisé par** les étapes suivantes :
réception, dans un dispositif central du réseau de téléphonie mobile, du message court envoyé au terminal mobile ;
envoi du message court au terminal mobile par l'intermédiaire de l'interface air ;
duplication automatique du message court en même temps que l'émission par l'intermédiaire de l'interface air ;
conversion du duplicata produit en courrier électronique ;
mise en mémoire du courrier électronique dans une boîte électronique personnelle de l'abonné mobile à l'intérieur d'un système de messagerie quelconque, indépendamment du réseau mobile ; et
lecture du courrier électronique par l'abonné mobile.

2. Procédé selon la revendication 1, **caractérisé en ce que** les messages courts envoyés sont mis en mémoire dans la boîte électronique qui est attribuée à l'abonné mobile envoyant ces messages courts.

3. Procédé selon la revendication 1, **caractérisé en ce que** les messages courts reçus sont mis en mémoire dans la boîte électronique qui est attribuée à l'abonné mobile auquel sont destinés les messages courts.

4. Procédé selon la revendication 2 ou 3, **caractérisé en ce que** les messages courts qui signalent l'arrivée d'un courrier électronique quelconque dans la boîte électronique sont exclus de la duplication.

5. Procédé selon la revendication 2 ou 3, **caractérisé en ce que** l'envoi d'un message court pour signaler l'arrivée d'un courrier électronique dans le terminal mobile n'a pas lieu si ce courrier électronique est un message court dupliqué et converti.

6. Procédé selon la revendication 1, **caractérisé en ce que** l'attribution de la boîte électronique aux abonnés mobiles se fait grâce aux abonnés mobiles eux-mêmes.
